Europäisches Patentamt

European Patent Office

Office européen des brevets

(19)

(11) Veröffentlichungsnummer: **0 284 717**
**B1**

(12) # EUROPÄISCHE PATENTSCHRIFT

(45) Veröffentlichungstag der Patentschrift:
**29.08.90**

(21) Anmeldenummer: **88100899.9**

(22) Anmeldetag: **22.01.88**

(51) Int. Cl.⁵: **B60T 15/14**, B60T 7/04

(54) Sollwertgeber.

(30) Priorität: **28.03.87 DE 3710256**

(43) Veröffentlichungstag der Anmeldung:
**05.10.88 Patentblatt 88/40**

(45) Bekanntmachung des Hinweises auf die Patenterteilung:
**29.08.90 Patentblatt 90/35**

(84) Benannte Vertragsstaaten:
**AT DE ES FR GB IT SE**

(56) Entgegenhaltungen:
**EP-A- 0 195 579**
**DE-A- 3 500 315**
**US-A- 4 300 409**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Eckert, Horst, Dipl.-Ing., Marienhöhe 2, D-3056 Rehburg-Loccum 3(DE)**
Erfinder: **Warendorf, Gerhard, Mellendorfer Strasse 41, D-3002 Wedemark 2(DE)**
Erfinder: **Feldmann, Joachim, Ing. (grad.), Auf dem Papenberg 8, D-3057 Neustadt 2(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

ACTORUM AG

**Beschreibung**

Die Erfindung bezieht sich auf einen Sollwertgeber gemäß dem Oberbegriff des Patentanspruchs 1.

Derartige Sollwertgeber dienen beispielsweise in Kraftfahrzeugen dazu, ein variables Signal zum betätigen der Bremse abzugeben. Dabei kann dieses Ausgangssignal entweder eine elektrische Spannung oder ein pneumatischer oder hydraulischer Steuerdruck sein. Der Geber wird vom Fahrer meist mit dem Fuß betätigt. Er muß, insbesondere in Lastkraftwagen, entsprechend robust aufgebaut sein.

Ein derartiger bekannter Sollwertgeber (DE-A 2 937 657) zur Bremsbetätigung weist eine Trittplatte auf, die in einem Lager drehbar geführt ist. Zur Begrenzung der Drehbewegung der Trittplatte sind Anschläge vorgesehen. Die Bewegung der Trittplatte wird über einen Stößel in das eigentliche Bremsventil geleitet und dort in einen weg- oder kraftabhängigen pneumatischen Steuerdruck umgewandelt. An das Bremsventil ist ein Potentiometer angebaut, welches durch die Trittplatte verstellbar ist. Hierdurch läßt sich eine von der Verstellung der Trittplatte abhängige elektrische Ausgangsspannung erzeugen.

Der bekannte Sollwertgeber mit den notwendigen Lagern, Umlenkungen, Federn und Anschlägen sowie Anbauten ist relativ kompliziert und aufwendig gebaut.

Der Erfindung liegt die Aufgabe zugrunde, einen einfach aufgebauten und damit kostengünstig zu fertigenden Sollwertgeber anzugeben. Der Sollwertgeber soll ein vorzugsweise elektrisches Ausgangssignal, das z.B. zum ansteuern einer elektrischen Fahrzeugbremse dienen kann, abgeben.

Diese Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand einer Zeichnung näher erläutert. Die Zeichnung zeigt in der

Fig. 1 eine Prinzip-Darstellung des erfindungsgemäßen Sollwertgebers und in den

Figuren 2 und 3 Varianten des Sollwertgebers mit veränderter Fußkraft-Einleitung.

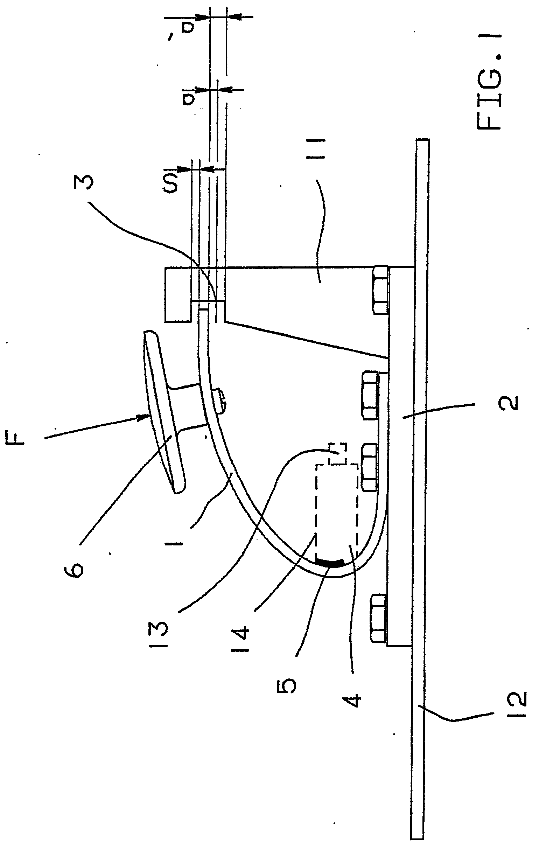

Der Sollwertgeber nach der Fig. 1 besteht im wesentlichen aus einer Grundplatte (2), aus einer an dieser befestigten, U-förmig gebogenen Blattfeder (1), einem die Blattfeder (1) abtastenden Sensor (4), einem die Verbiegung der Blattfeder (1) begrenzenden Träger (11) mit Anschlag (3), sowie einer an der Blattfeder (1) befestigten Pedalplatte (6). Die Grundplatte (2) ist an geeigneter Stelle im Fahrzeug auf einem Bodenblech (12) befestigt. Die Pedalplatte (6) wird durch den Fahrer mit einer Fußkraft F betätigt.

Der Sensor (4) fühlt die Verbiegung der Blattfeder (1) ab. Hierzu ist an der Blattfeder (1) ein Dehnungsmeßstreifen (DMS) (5) bekannter Bauart aufgebracht.

Ein weiterer bekannter Sollwertgeber der eingangs genannten Art der dem Oberbegriff des geltenden Anspruchs 1 entspricht, ist aus der EP-A 0 195 579 bekannt. Dieser Geber besitzt eine Trittplatte mit einer geraden Blattfeder, welche bei Betätigung des Gebers verbiegbar ist. Die Verbiegung der Blattfeder wird über eine Umlenkung mittels eines Potentiometers abgefühlt. Dieses gibt ein elektrisches Ausgangssignal ab, welches in vorgebener Weise vom Winkel der Trittplatte abhängt.

Es können jedoch auch anderen Meßprinzipien verwendet werden. So kann z.B. der Weg der sich verbiegenden Blattfeder (1) durch einen Wegsensor bekannter Bauart abgetastet werden. Als Wegsensor kann ein Potentiometer oder eine Spule mit verschiebbarem Kern verwendet werden. Der feste Teil des Sensors ist dann an der Grundplatte (2) angebracht.

Die Verbiegung der Blattfeder (1) kann auch optisch, z.B. mittels einer Lichtschranke abgetastet werden. Dies kann auch unter Zwischenschaltung eines Lichtleiters erfolgen, mit dem Vorteil, daß die Elektronik nicht unmittelbar am Geber angeordnet sein muß. Der Sensor (4) ist mit einer Kapselung (14) versehen und besitzt eine elektrische Anschlußbuchse (13).

Der Sensor (4) gibt ein kraft- oder wegabhängiges elektrisches Ausgangssignal ab, das z.B. zum Ansteuern einer elektrischen Bremsanlage verwendet werden kann.

Um zu gewährleisten, daß die Verbiegung der Blattfeder (1) stets im elastischen Bereich erfolgt, ist an einem Träger (11), der auf der Grundplatte (2) befestigt ist, ein Anschlag (3) zur Begrenzung des Hubes der Blattfeder (1) angebracht.

Gezeichnet ist die kräftefreie Stellung der Blattfeder (1). Der Hub a entspricht einem an der Bremse ausgesteuerten Druck von 0 bis $P_{max}$. Der Hub a′ entspricht dem vom Federmaterial der Blattfeder (1) vorgegebenen zulässigen Hub. Der Hub s entspricht dem zulässigen Hub in umgekehrter Richtung.

Durch den beschriebenen Anschlag (3) ist sicher gestellt, daß die Blattfeder (1) durch äußere Krafteinwirkungen nicht über ihre Elastizitätsgrenze hinaus belastet werden kann. Hieraus ergibt sich der weitere Vorteil, daß der aufgebrachte Dehnungsmeßstreifen (5) oder ein anderer Spannungssensor mit einer relativ großen absoluten Dehnung beaufschlagt werden kann, da sein Arbeitsbereich bis fast zur Elastizitätsgrenze reichen kann.

Ein Vorteil des erfindungsgemäßen Sollwertgebers ist, daß eine nennenswerte Hysterese hier nicht zu befürchten ist.

Durch eine besondere Formgebung der Blattfeder (1) oder durch Ausstanzungen sind, ähnlich wie bei Tellerfedern, auch progressive Kraftzunahmen über den Weg ausführbar (nicht dargestellt).

Als Material für die Blattfeder (1) wird normalerweise Federstahl, eventuell in rostfreier Ausführung, verwendet. Es kann aber auch ein geeigneter, z.B. glasfaserverstärkter Kunststoff eingesetzt werden. Hierdurch läßt sich eine spezielle Formgebung, z.B. eine variable Dicke, leichter realisieren.

Da die Kapselung (14) mit dem Sensor (4) und der integrierten Elektronik im inneren Bereich der Krümmung der Blattfeder (1) angeordnet ist, ist der Sensor relativ geschützt vor äußerer mechanischer Einwirkung.

Eine Mehrkreisigkeit des Bremswertgebers sowie eine Funktionskontrolle des Sensors kann leicht durch aufbringen mehrerer Sensoren an der Blattfeder (1) erreicht werden. Es können dabei je nach Sicherheitsanforderung aktive (steuernde) und inaktive (überwachende) Sensoren angebracht werden. Dabei steuern die aktiven Sensoren über Verstärker die zu den einzelnen Bremskreisen gehörenden Regelventile. Die inaktiven Sensoren dienen lediglich zum Vergleich bzw. zur Überwachung der aktiven Sensoren.

Nach EG-Vorschrift ist das hier verwendete Federelement als Verbindungsteil zwischen zwei Bremskreisen zugelassen.

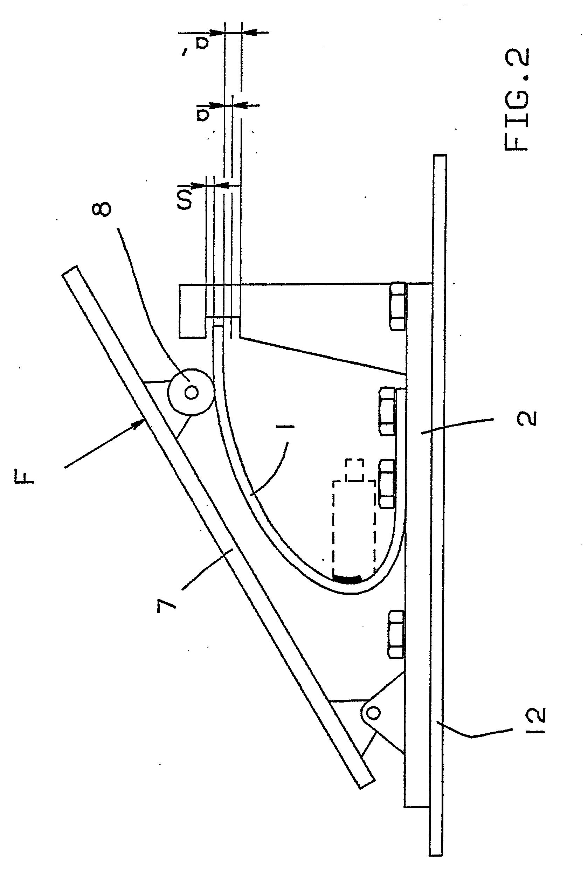

Die Anordnung nach der Fig. 2 unterscheidet sich von der nach der Fig. 1 lediglich durch eine andere Art der Einleitung der Fußkraft F des Fahrers auf die Blattfeder (1). Die Fußkraft F wirkt hier auf eine am Bodenblech (2) angelenkte Trittplatte (7). An der Trittplatte (7) ist eine Rolle (8) befestigt, die auf der Blattfeder (1) abrollt.

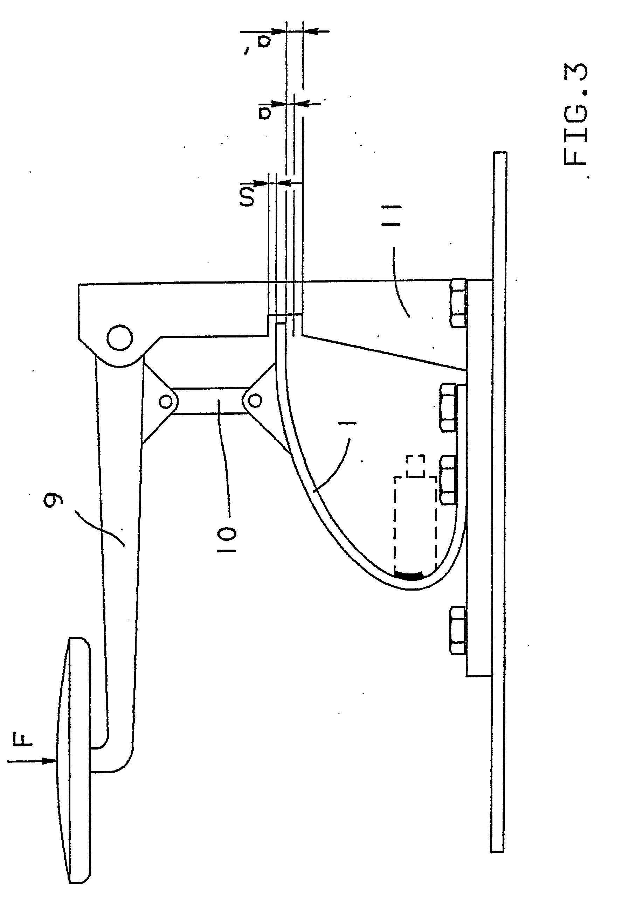

Gemäß der Ausführung nach der Fig. 3 wird die Fußkraft F des Fahrers über eßnen Hebel (9) eingeleitet. Der Hebel (9) ist am oberen Ende des Trägers (11) gelenkig gelagert. Die Bewegung des Hebels (9) wird über ein Verbindungsstück (10) auf die Blattfeder (1) geleitet.

Die in den Figuren 2 und 3 dargestellten Auführungen der Krafteinleitung sichern eine größere Konstanz des Kraftangriffes auf die Blattfeder (1). Sie haben jedoch eine - allerdings vertretbare Hysterese zur Folge.

Bei den Ausführungen nach den Figuren 2 und 3 ist weiter eine Beeinflussung der Kraft-Weg-Kennlinie durch eine entsprechende Auslegung der Anlenkgeometrie möglich.

Die Blattfeder (1) ist in den gezeigten Ausführungsbeispielen U-förmig gebogen. Sie kann aber auch anders, z.B. S-förmig gebogen sein, oder gerade ausgeführt sein (nicht dargestellt).

Der erfindungsgemäße Sollwertgeber kann außer als Bremswertgeber auch als Geber für das Gas, die Kupplung, oder andere servobetätigte Einrichtungen verwendet werden. Er ist durch seinen relativ einfachen Aufbau sehr kostengünstig zu fertigen.

## Patentansprüche

1. Sollwertgeber, insbesondere zur Steuerung einer fremdkraftbetätigten Bremsanlage in einem Kraftfahrzeug, welcher vom Fahrer vorzugsweise mit dem Fuß betätigbar ist, und welcher eine kraft- oder wegabhängige elektrische Ausgangsgröße abgibt mit einer Blattfeder (1), die durch die Fußkraft F verbiegbar ist und mindestens einem Sensor (4), welcher die Verbiegung der Blattfeder (1) abtastet, dadurch gekennzeichnet, daß als Sensor (4) mindestens ein Dehnungsmeßstreifen (5) auf der Oberfläche der Blattfeder (1) angebracht ist.

2. Sollwertgeber nach Anspruch 1, dadurch gekennzeichnet, daß die Blattfeder (1) U-förmig gebogen und mit einem Ende auf einer Grundplatte (2) befestigt ist.

3. Sollwertgeber nach Anspruch 1 bis 2, dadurch gekennzeichnet, daß die Auslenkung der Blattfeder (1) durch mindestens einen Anschlag (3) eines Trägers (11) begrenzt ist.

4. Sollwertgeber nach Anspruch 1 bis 3, dadurch gekennzeichnet, daß der Sensor (4) gekapselt ist.

5. Sollwertgeber nach Anspruch 1 bis 4, dadurch gekennzeichnet, daß die Kapselung (14) zusätzlich eine integrierte Elektronik zur Verstärkung und Signalaufbereitung des Sensorsignals enthält.

6. Sollwertgeber nach Anspruch 1 bis 5, dadurch gekennzeichnet, daß die Kraft-Weg-Kennlinie der Blattfeder (1) durch eine entsprechende Formgebung oder durch Ausstanzungen progressiv verläuft.

7. Sollwertgeber nach Anspruch 1 bis 6, dadurch gekennzeichnet, daß die Blattfeder (1) aus einem faserverstärkten Kunststoff hergestellt ist.

8. Sollwertgeber nach Anspruch 1 bis 7, dadurch gekennzeichnet, daß die Fußkraft F über eine direkt an der Blattfeder (1) befestigte Pedalplatte (6) einleitbar ist (Fig. 1).

9. Sollwertgeber nach Anspruch 1 bis 7, dadurch gekennzeichnet, daß die Fußkraft F über eine an der Grundplatte (2) angelenkte Trittplatte (7) sowie eine Rolle (8) auf die Blattfeder (1) leitbar ist.

10. Sollwertgeber nach Anspruch 1 bis 7, dadurch gekennzeichnet, daß die Fußkraft F über einen am Träger (11) angelenkten Hebel (9) und einen weiteren Hebel (10) auf die Blattfeder (1) leitbar ist.

## Claims

1. Setting means, especially for controlling a braking system actuated by an external force in a motor vehicle, which setting means can be actuated by the driver, preferably with his foot, and which supplies a force- or displacement-dependent electrical output variable by means of a leaf spring (1) that is bendable by means of the foot force F and at least one sensor (4) that scans the bending of the leaf spring (1), characterised in that, as the sensor (4), at least one strain gauge (5) is attached to the surface of the leaf spring (1).

2. Setting means according to claim 1, characterised in that the leaf spring (1) is curved in a U-shape and is secured by one end to a base plate (2).

3. Setting means according to claim 1 or 2, characterised in that the excursion of the leaf spring (1) is limited by at least one stop (3) on a support (11).

4. Setting means according to claims 1 to 3, characterised in that the sensor (4) is encapsulated.

5. Setting means according to claims 1 to 4, characterised in that the encapsulation (14) additionally contains integrated electronics for amplifying and conditioning the sensor signal.

6. Setting means according to claims 1 to 5, characterised in that as a result of suitable shaping or cut-outs the force-displacement characteristic of the leaf spring (1) is progressive.

7. Setting means according to claims 1 to 6, characterised in that the leaf spring (1) is manufactured from a fibre-reinforced plastics material.

8. Setting means according to claims 1 to 7, characterised in that the foot force F can be applied by way of a pedal plate (6) secured directly to the leaf spring (1) (Fig. 1).

9. Setting means according to claims 1 to 7, characterised in that the foot force F can be conveyed to the leaf spring (1) by way of a pedal plate (7) coupled to the base plate (2), and a roller (8).

10. Setting means according to claims 1 to 7, characterised in that the foot force F can be conveyed to the leaf spring (1) by way of a lever (9) coupled to the support (11), and a further lever (10).

**Revendications**

1. Emetteur de valeur de consigne, notamment pour la commande d'une installation de freinage actionnable par une force extérieure, à bord d'un vehicule automobile, cet émetteur pouvant être actionné de préférence par le pied du conducteur et fournissant une grandeur de sortie électrique dépendant de la force ou du déplacement, ledit émetteur comportant un ressort à lame (1) déformable en flexion par la force du pied (F) et au moins un capteur (4) lisant la déformation élastique du ressort à lame (1), caractérisé par le fait qu'au moins une jauge extensométrique (5) est agencée, en tant que capteur (4), sur la surface du ressort à lame (1).

2. Emetteur de valeur de consigne selon la revendication 1, caractérisé par le fait que le ressort à lame (1) est cintré en forme de U et est fixé, par une extrémité, à une plaque de base (2).

3. Emetteur de valeur de consigne selon la revendication 1 à 2, caractérisé par le fait que la déflexion du ressort à lame (1) est limitée par au moins une butée (3) d'un support (11).

4. Emetteur de valeur de consigne selon revendication 1 à 3, caractérisé par le fait que le capteur (4) est sous enveloppe.

5. Emetteur de valeur de consigne selon la revendication 1 à 4, caractérisé par le fait que l'enveloppe (14) contient en outre une électronique intégrée pour amplifier et traiter le signal provenant du capteur.

6. Emetteur de valeur de consigne selon revendication 1 à 5, caractérisé par le fait que la caractéristique force-déplacement du ressort à lame (1) possède une allure progressive grâce à une configuration correspondante au grâce à des découpes.

7. Emetteur de valeur de ccnsigne selon la revendication 1 à 6, caractérisé par le fait que le ressort à lame (1) est en une matière plastique renforcée par des fibres.

8. Emetteur de valeur de consigne selon la revendication 1 à 7, caractérisé par le fait que la force du pied F est applicable par l'intermédiaire d'une plaque-pédale (6) fixée directement au ressort à lame (1) (figure 1).

9. Emetteur de valeur de consigne selon revendication 1 à 7, caractérisé par le fait que la force du pied F est applicable au ressort à lame (1) par l'intermédiaire d'une plaque-pédale (7) articulée sur la plaque de base (2) ainsi que par l'intermédiaire d'un galet (8).

10. Emetteur de valeur de consigne selon la revendication 1 à 7, caractérisé par le fait que la force du pied F est applicable au ressort à lame (1) par l'intermédiaire d'un levier (9) articulé sur le support (11) et par l'intermédiaire d'un autre levier (10).

FIG.1

FIG.2

FIG.3

EP 0 284 717 B1